# EUROPEAN PATENT APPLICATION

(11) **EP 1 605 713 A1**
(43) Date of publication of application: **14.12.2005**
(21) Application number: 05076283.0
(22) Date of filing: 03.06.2005
(51) Int. Cl.: H04Q 7/24

(54) **Communication system for location based call routing**

(30) Priority: 12.06.2004 GB 0413127
(71) Applicant: SIEMENS PLC, Bracknell, Berkshire RG12 8FZ (GB)
(72) Inventor: Noble, Roger, Wimbourne BH21 6QU (GB); Saul, Jeremy Gordon, Poole BH1 9BP (GB)
(74) Representative: Morgan, Marc

(57) **Abstract**

The apparatus enables communication between a mobile unit travelling in a travel network and a global type such as a travel network controller. The controller relevant to that part of the travel network is contactable by dialling a code allocated to that global type. As the mobile unit progresses through the travel network the travel network controller responsible for a current location will change. The subscriber number to be attributed to the short code for a particular mobile unit is therefore updated as the unit travels. In the case of a train network the communication system is a GSM-R based system.

## Description

This invention relates to apparatus for enabling communication between a mobile unit travelling in a travel network and communication nodes of a communications network. Particularly, but not exclusively, it relates to a mobile unit travelling in a train network but it is applicable to other types of travel networks.

Train networks in many countries have trackside telephones to enable track-workers or train-drivers to contact controllers for that part of the track. These are land-line based telephones with the attendant disadvantages of fixed location and the requirement for the driver to stop and leave the train. When thought is given to the possible purposes of the communication, for example, an emergency such as a derailment, it will be appreciated that it is highly desirable to provide a mobile communication unit on the train itself or hand-carried by the railway staff.

A cellular based system has been proposed to provide the desirable mobility called GSM-R.

In GSM-R, a number of base stations are sited to provide overlapping cells aligned with the railway network. Trains are equipped with mobile units which can be used by the driver to make and receive calls.

A problem arises, however, with such a network. In the earlier land-line based system, in the event of an emergency, a caller at the track-side telephone is immediately connected to a track-controller for that part of the railway network. The track-controller is then able to respond by taking emergency action such as signalling to other trains to stop and the like. That response will take into account the location.

In proposed GSM-R networks, it will be difficult to route calls to a group which may vary over the railway network. The group may include track-controllers, track-side maintenance staff and station staff. Whilst it would be possible to call each by using a unique mobile or telephone number, these numbers would not be readily remembered. Thus, it is desirable for a particular number dialled or button of the mobile to be allocated to particular types or groups of users for the whole or substantial parts of the network. These are referred to as global types in this specification.

The problem may also manifest itself in networks other than railways. Thus, in its broadest aspect, the invention accordingly provides communication apparatus for enabling communication between a mobile unit travelling in a travel network and communication nodes of a communications network associated with particular parts of the travel network and being of a global type which apparatus comprising; a locator to detect a location of the mobile unit in the network, a communications network configurer responsive to the locator to configure the communications network such that calls from the mobile unit to the global type are routed to communications nodes associated with that part of the travel network where the mobile unit is located.

By configuring the network in the aforementioned way, a user of the mobile unit will be able to contact the global type user for that part of the travel network where the mobile unit is located. In the specific embodiment, the travel network is a rail network but the invention will have a wider application. The global type user may be a controller responsible for that part of the travel network where the mobile user is located, maintenance, station staff or other types of user or combinations of these. The communication nodes may include user equipment such as terminals, workstations, mobile communications equipment, telephones or other such equipment.

A specific embodiment of the invention will now be described with reference to the drawings in which:
Figure 1 shows a diagram of a train network and communication apparatus in accordance with the invention;
Figure 2 shows part of the apparatus of Figure 1 showing the establishment of a call to a global type;
Figures 3 to 7 show memory structures used in the apparatus to route calls to a global type based on a short code and current location of a train; and
Figures 8 and 9 show the way in which calls are placed using the memory structures shown in figures 2 to 7.

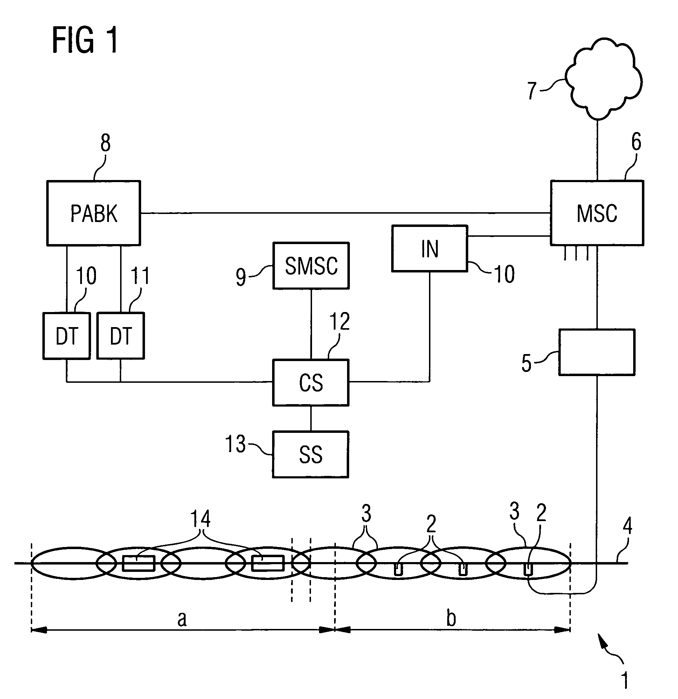

As is shown in Figure 1, a communication network 1, comprises a number of base-stations 2 providing a number of cells 3. The cells overlap to provide complete coverage of a railway track 4.

Each base-station 2 is linked to the rest of the communications network by a base-station controller 5 (only one is shown). The base-station controllers 5 are connected to a mobile services switching centre (MSC) 6 and thus to other networks 7 such as the public switched telephone networks. To this extent the communications network will be familiar to these skilled in the art of GSM networks.

In this embodiment, the MSC 6 is also connected to a PABX 8, a short message service centre (SMSC) 9 and an intelligent network (IN) 10. The PABX 8 is connected to a number of dispatcher terminals 10, 11 two of which are shown. The dispatcher terminals 10, 11 are communications nodes which enable communication with the terminal users. The dispatcher terminals 10, 11 are connected to a controller server (CS) 12.

The controller server 12 is connected to the intelligent network 10 and the SMSC 9. In addition, it is connected to a signalling system 13.

The signalling system 13 tracks the position of trains 14 as they pass along the track 4. In this case the system uses trackside detectors and beacons but it could be a GPS based location system. Each train 4 is provided with a mobile unit.

The users of the dispatcher terminals 10, 11 are track-controllers. This means they have responsibility for controlling traffic flow and the attendant safe operating of discrete stretches of the track. In this case, the track-controller operating terminal 10 is the track-controller for length a of the track, whilst the user of terminal 11 is the track-controller for length b. Thus, as a train travels along the track 4 it will pass from one area of responsibility to another. If it travels from area b to a it will be firstly controlled by the user of dispatcher terminal 11 and then secondly come under the control of the user of dispatcher terminal 10.

Each track-controller is one of a global (in the sense of network wide) type. Throughout the network there are track-controllers and as a train travels the network its journey will take it through the areas for which a number are responsible.

Each mobile unit is provided with a button allocated to contact a track-controller. The apparatus ensures that when this global type button is depressed, a short code 122 is sent and a call is established to the track-controller for the length of track on which the train is located. In order to do this the intelligent network 10 maintains a database of translations which are updated as the train progresses through the network. This maintenance ensures that a rapid call connection can be achieved.

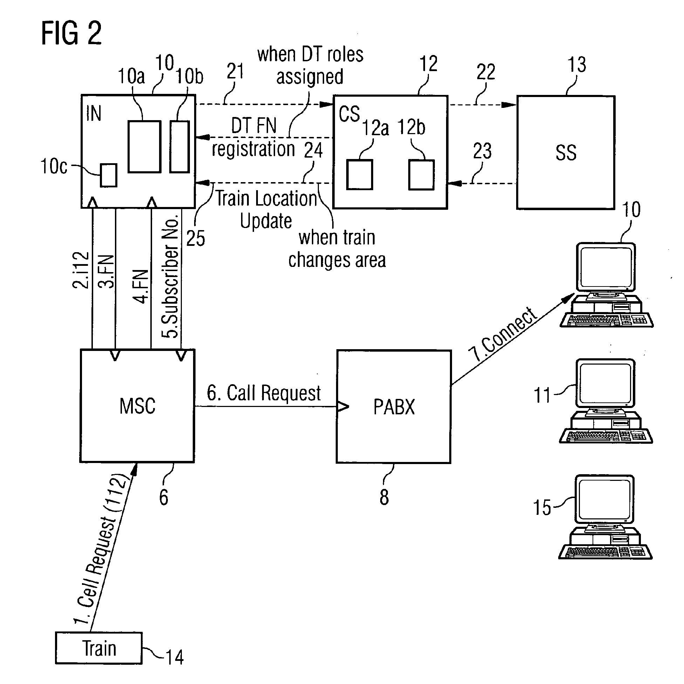

Figures 2 to 7 illustrate the way in which the translations are maintained and how they are used to establish calls to the correct track-controller. The components of the system include a number of memory tables to enable the establishment of calls to the appropriate user type.

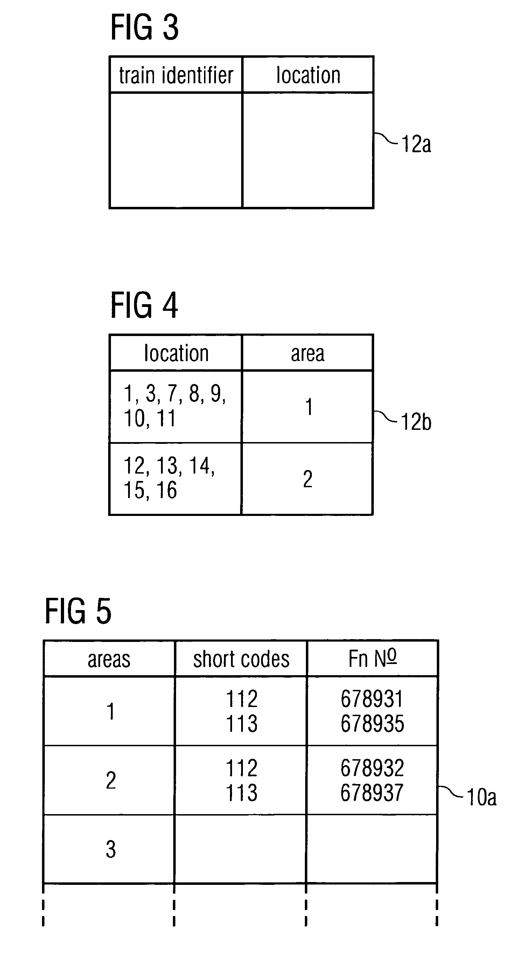

The CS 12 includes a memory table 12a containing a list of train identifiers and their last known locations. This table is shown in Figure 3. Figure 4 shows a second table 12b located in the CS12. This second table associates track locations with track areas. A track area comprises a number of possible track locations. Thus it will be seen that track locations 1,3,7,8,9,10 and 11 fall within area 1 and track locations 12 to 16 lie within area 2. The controller's have responsibility for particular areas.

The IN 10 has three memory tables, 10a, 10b and 10c. In table 10a we have an association of travel areas, short codes and functional numbers. This is shown in Figure 5 and it will be seen that there is a first field for the area, a second for the short codes and a third field for the functional numbers. Thus, in the given table area 1 has, for short codes 112, 113, functional numbers 678931 and 678935 respectively. Area 2 has, for short codes 112, 113, the functional numbers 678932 and 678937. There are more areas and numbers than shown.

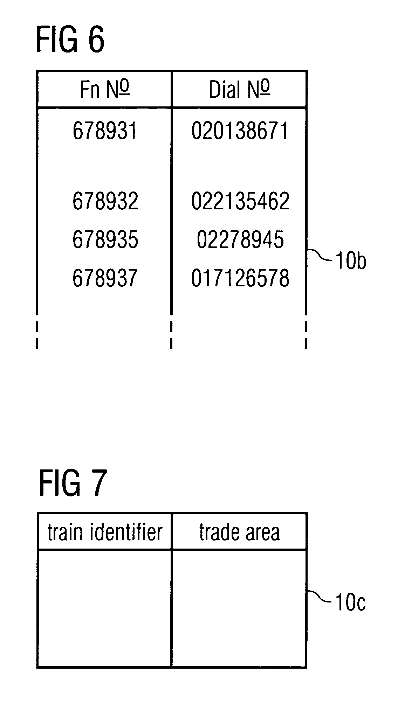

Figure 6 shows table 10b which links the functional number to a dial or subscriber number. Thus it will be seen that functional number 678931 returns a dial number 020138671, functional numbers 678932, 678935 and 678937 return respective dial numbers 022135462, 02278945 and 017126578.

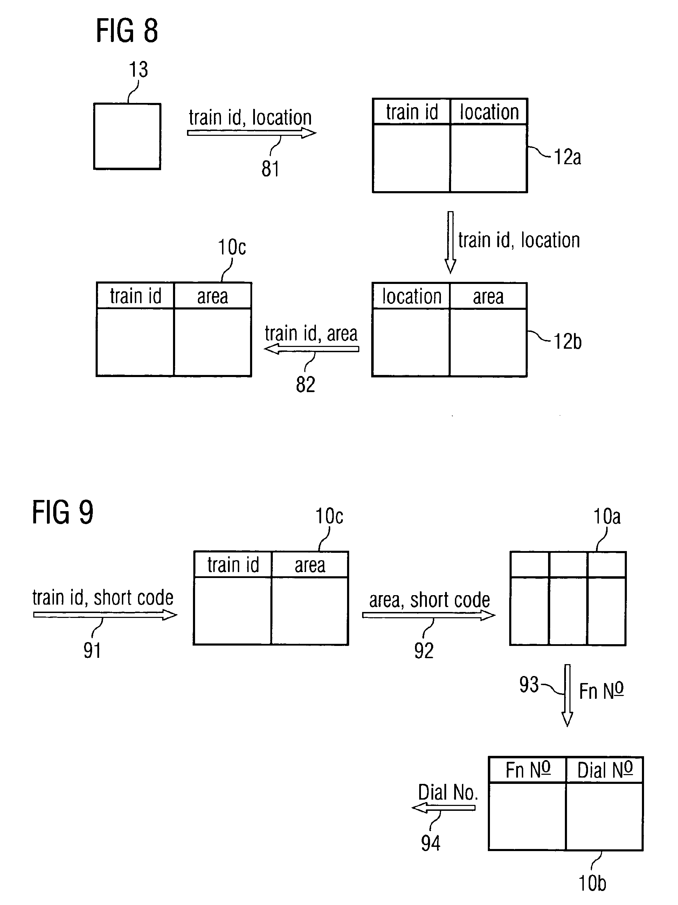

Table 10c is shown in Figure 7. It includes a field for a train identifier and an associated track area appropriate to the area where the train is located. As the trains travel through the network, the location and hence the area is updated for that train. In doing this, the numbers that will be dialled for given short codes will be updated for that train. As is shown in Figure 8, the signalling system 13 monitors the locations of trains in the network and sends update messages 81 containing the train identifier and its location.

This message is received by CS12 and entered into its look-up table 12a. This also prompts an input to the look-up table 12b which returns the appropriate area to allocate the train to be based on the current location. The output 82 of the table 12b includes the train identifier and the area. This information is output from the CS12 to the IN 10 and entered into table 10c.

Figure 9 illustrates the way in which the tables are utilised which a call is placed from a train located mobile. The MSC 6 receives the call request from the base-station controller 5. The call request includes the train identifier and the short code and a message 91 including this information is passed to the intelligent network 10. The information is input into the table 10c which returns the area and short code 92. The area and short code 92 are input into the look-up table 10a which returns the associated functional number 93.

The functional number 93 is then input into table 10b which returns the associated dial number 94.

The dial number 94 is then used to place the call.

## Claims

1. Communication apparatus for enabling communication between a mobile unit travelling in a travel network and communication nodes of a communications network associated with particular parts of the travel network and being of a global type which apparatus comprising:
a locator to detect a location of the mobile unit in the travel network;
a communications network configurer responsive to the locator to configure the communications network such that calls from the mobile unit to the global type are routed to communications nodes associated with that part of the travel network where the mobile unit is located.

2. Apparatus as claimed in claim 1 including means to allocate subscriber numbers to a short code representing a global type for the mobile unit.

3. Apparatus as claimed in claim 2 wherein the allocation is made on the basis of the location of the mobile unit.

4. Apparatus as claimed in any one of claims 1 to 3 including means to revise the configuration.

5. Apparatus as claimed in claim 4 wherein the means to revise the configuration in responsive to a location update message from the locator.

6. Apparatus as claimed in any preceding claim including a cellular communications network.

7. Apparatus as claimed in claim 6 wherein the cellular communications network is a GSM-R network.

8. A mobile communications until for use in apparatus as claimed in any proceding claim.

9. Apparatus substantially as hereinbefore described with reference to and as illustrated by the drawings.
